# EUROPEAN PATENT SPECIFICATION

(11) **EP 3 075 189 B1**
(45) Date of publication and mention of the grant of the patent: **29.04.2020**
(21) Application number: 14866388.3
(22) Date of filing: 26.09.2014
(51) Int. Cl.: H04L 29/06, H04L 29/08, H04W 8/00

(54) **WIFI VIRTUAL CARRIER SENSE FOR LTE/WIFI CO-CHANNEL COORDINATION**
VIRTUELLE WIFI-TRÄGERABTASTUNG FÜR LTE/WIFI-COKANALKOORDINATION
DÉTECTION DE PORTEUSE VIRTUELLE WIFI POUR UNE COORDINATION DE CO-CANAL LTE/WIFI

(30) Priority: 27.11.2013 US 201361909938 P
(43) Date of publication of application: 05.10.2016
(73) Proprietor: Intel Corporation, Santa Clara, CA 95052 (US)
(72) Inventor: ELLIOTT, Brent, Hillsboro, Oregon 97124 (US); SERGEYEV, Vadim Sergeyevich, Nizhny Novgorod 603105 (RU); BASHAR, Shafi, Santa Clara, California 95054 (US); HAN, Seunghee, San Jose, California 95120-4164 (US); DAVYDOV, Alexei Vladimirovich, Nizhny Novgorod 603132 (RU); FWU, Jong-Kae, Sunnyvale, California 94087 (US)
(74) Representative: Gillard, Matthew Paul
(86) International application number: PCT/US2014/057619
(87) International publication number: WO 2015/080796

(56) References cited:
- WO-A1-2013/013409
- WO-A1-2013/087835
- US-A1- 2007 165 593
- US-A1- 2008 019 343
- US-A1- 2008 063 106
- US-A1- 2008 119 130
- US-A1- 2008 267 162
- US-A1- 2012 064 902
- US-A1- 2012 077 510

## Description

### TECHNICAL FIELD

Embodiments pertain to transmitting packetized data using radio access networks. Some embodiments relate to communicating cellular device information using a communication spectrum unlicensed to the type of cellular device used to communicate the information.

### BACKGROUND

Radio access networks are used for delivering one or more of data communications, voice communications, and video communications to user equipment such as a cellular telephone or a smart phone. Some radio networks are packet switched networks and packetize information such as voice and video data when it is sent over the network. As the demand for communicating voice and video increases, quality of service can deteriorate as the radio access networks approach their peak capacity. Thus, there are general needs for devices, systems and methods that provide a robust protocol for communication with user equipment.

WO 2013/013409 A1 discloses UEs capable of using a band for radio cellular communication and another band for WLAN communication. A first UE senses the channel spectrum of a contending channel and sends a RTS frame to a second UE if the channel condition is appropriate. If the second UE receives the corresponding RTS frame, it sends a CTS frame to the first UE. If the first UE receives the respective CTS frame, the first and second UEs then occupy the shared band channel.

US 2012/077510 A1 discloses D2D data transmission using both licensed and unlicensed bands, wherein unlicensed resources are reserved by previous RTS/CTS signaling.

WO 2013/087835 A1 discloses a device listening to a channel for a period of time, and sending a RTS message if it senses no ongoing transmission.

### BRIEF DESCRIPTION OF THE DRAWINGS

FIG. 1 shows an example of a portion of an end-to-end network architecture of an LTE network with various components of the network in accordance with some embodiments;
FIG. 2 shows a flow diagram of an example of a method of operating a wireless cellular device network in accordance with some embodiments;
FIG. 3 illustrates a functional block diagram of a wireless cellular device in accordance with some embodiments in accordance with some embodiments;
FIG. 4 illustrates a simplified example of operating a cellular device to reserve time on a WiFi communication channel in accordance with some embodiments;
FIG. 5 shows a timing diagram of an example of a message sent by a cellular device to reserve time on a WiFi communication channel in accordance with some embodiments; and
FIG. 6 shows a timing diagram of another example of a message sent by a cellular device to reserve time on a WiFi communication channel in accordance with some embodiments;
FIG. 7 shows a timing diagram of yet another example of a message sent by a cellular device to reserve time on a WiFi communication channel in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

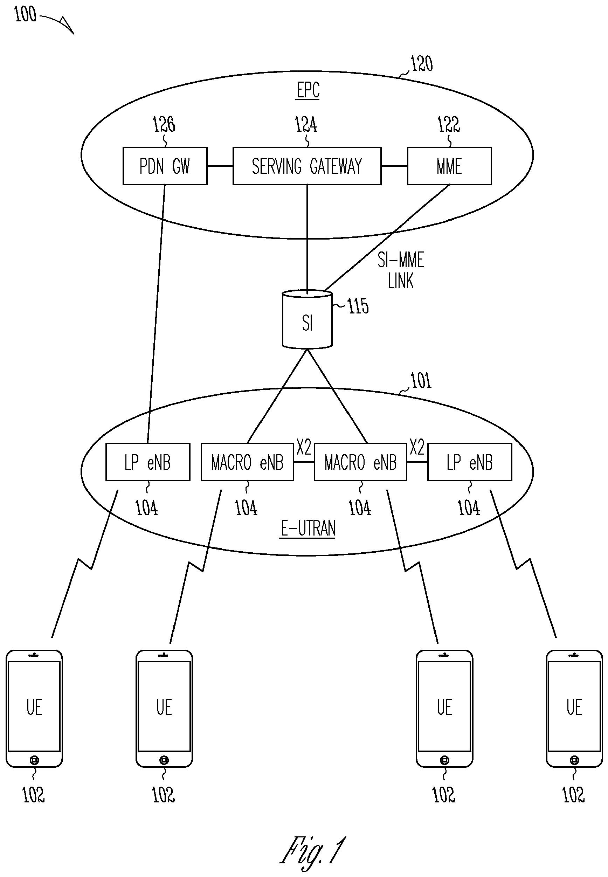

FIG. 1 shows an example of a portion of an end-to-end network architecture of a long term evolution (LTE) network with various components of the network in accordance with some embodiments. The network 100 comprises a radio access network (RAN) (e.g., as depicted, the E-UTRAN or evolved universal terrestrial radio access network) 101 and the core network 120 (e.g., shown as an evolved packet core (EPC)) coupled together through an S1 interface 115. For convenience and brevity, only a portion of the core network 120, as well as the RAN 101, is shown in the example.

The core network 120 includes mobility management entity (MME) 122, serving gateway (serving GW) 124, and packet data network gateway (PDN GW) 126. The RAN includes enhanced node B's (eNBs) 104 (which may operate as base stations) for communicating with user equipment (UE) 102. The eNBs 104 may include macro eNBs and low power (LP) eNBs.

The MME 122 is similar in function to the control plane of legacy Serving GPRS Support Nodes (SGSN). The MME manages mobility aspects in access such as gateway selection and tracking area list management. The serving GW 124 terminates the interface toward the RAN 101, and routes data packets between the RAN 101 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. In some embodiments, an eNB 104 may fulfill various logical functions for the RAN 101 including but not limited to RNC (radio network controller functions) such as radio bearer management, uplink and downlink dynamic radio resource management and data packet scheduling, and mobility management. In accordance with embodiments, UEs 102 may be configured to communicate OFDM communication signals with an eNB 104 over a multicarrier communication channel in accordance with an OFDMA communication technique. The OFDM signals may comprise a plurality of orthogonal subcarriers.

The S1 interface 115 is the interface that separates the RAN 101 and the EPC 120. It is split into two parts: the S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a microcell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB to a UE. The grid may be a time-frequency grid, called a resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements and in the frequency domain; this represents the smallest quanta of resources that currently can be allocated. There are several different physical downlink channels that are conveyed using such resource blocks. Two of these physical downlink channels are the physical downlink shared channel and the physical down link control channel.

The physical downlink shared channel (PDSCH) carries user data and higher-layer signaling to a UE 102 (FIG. 1). The physical downlink control channel (PDCCH) carries information about the transport format and resource allocations related to the PDSCH channel, among other things. It also informs the UE about the transport format, resource allocation, and H-ARQ information related to the uplink shared channel. Typically, downlink scheduling (assigning control and shared channel resource blocks to UEs within a cell) is performed at the eNB based on channel quality information fed back from the UEs to the eNB, and then the downlink resource assignment information is sent to a UE on the control channel (PDCCH) used for (assigned to) the UE.

As explained previously, the demand for communicating one or both of voice data and video data continues to increase. A RAN 101 may experience heavy communication traffic which can lead to adverse network effects such as communication latency for example. As shown in FIG. 1, a RAN can include UE devices and eNB devices such as LP eNBs and/or macro eNBs. To alleviate network traffic, network capacity can be added by providing communication capability to the RAN devices from networks that operate using a communication spectrum not licensed for use by the cellular network devices. Communication peaks may occur locally and the RAN serving the locality may experience peak demand. The locality may include a WiFi network for computing devices such as laptop computers and computer tablets, but the wireless cellular devices are not licensed to operate in the WiFi communication spectrum (e.g., communication channels of 2.4 gigahertz (GHz) or 5GHz). According to some embodiments, the wireless cellular devices of a RAN reserve communication time on the WiFi communication channel and communicate information using the WiFi communication spectrum.

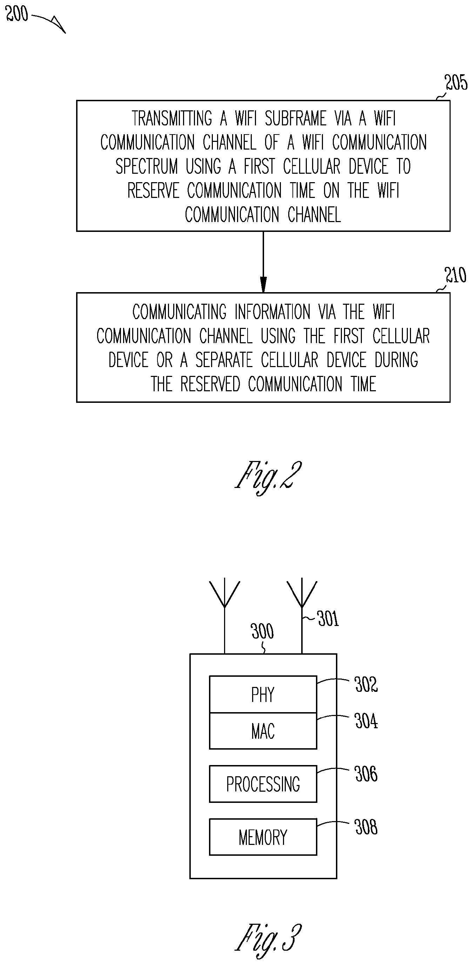

FIG. 2 shows a flow diagram of a background example of a method 200 of operating a wireless cellular device network. The method is not covered by the claims. The cellular device network may include one or more eNBs and UEs. The cellular device network may be, among other things, an LTE cellular network, an LTE- Advanced cellular network, or a fifth generation (5G) LTE cellular network. To mitigate possible interference to WiFi devices caused by the cellular device transmissions on WiFi channels, the cellular devices use a time reserving message to inform the WiFi devices of transmissions by one or more cellular devices. This reduces the amount of collisions between devices that may otherwise occur, and promotes an acceptable level of use of WiFi communication channels by both the cellular devices and the WiFi devices. It also provides for lower-overhead communication among multiple cellular devices through the central scheduling of one or both of cellular downlink and uplink transmissions.

At block 205, a WiFi subframe is transmitted via a WiFi communication channel of a WiFi communication spectrum using a cellular device. The WiFi communication channel may be established by a WiFi network implemented under one of the Institute of Electrical and Electronic Engineers 802.11 standards, such as the IEEE 802.11-2012 standard published March 29, 2012.

The WiFi subframe may include a message that reserves communication time on the WiFi communication channel. The WiFi subframe may be included in a WiFi frame or a cellular network frame. Any WiFi device monitoring the WiFi communication channel that is capable of decoding the message will consider the channel unavailable and will defer any transmission and may defer countdown of its contention window until after the duration of the reserved time has elapsed.

At block 210, the reserved time is used by a cellular device to communicate information with another cellular device via the WiFi communication channel. The reserved time can be used by the cellular device that transmitted the message or can be used by a separate cellular device. The reserved time can be used for communication between a cellular network node device (e.g., an eNB) and a cellular UE device (e.g., a smart phone), between two UE devices, or between two network node devices.

FIG. 3 illustrates a functional block diagram of a wireless cellular device not covered by the claims. The cellular device 300 may be any of the UEs 102 illustrated in FIG. 1, or the cellular device may be any of the eNBs 104 of FIG. 1. The cellular device 300 may include physical layer (PHY) circuitry 302 for transmitting and receiving radio frequency electrical signals using one or more antennas 301 electrically connected to the PHY circuitry. The PHY circuitry 302 may include circuitry for modulation/demodulation, upconversion/downconversion, filtering, amplification, etc. Cellular device 300 may also include medium access control layer (MAC) circuitry 304 for controlling access to the wireless medium and to configure frames or packets for communicating over the wireless medium. Cellular device 300 may also include processing circuitry 306 and memory 308 arranged to configure the various elements of the cellular device to perform the operations described herein. The memory 308 may be used to store information for configuring the processing circuitry 306 to perform the operations.

In some embodiments, the cellular device 300 may be a UE and be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the cellular device 300 may include one or more of a keyboard, a display, a non-volatile memory port, multiple antennas, a graphics processor, an application processor, speakers, and other mobile device elements. The display may be an LCD screen including a touch screen.

The one or more antennas 301 utilized by the cellular device 300 may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated to take advantage of spatial diversity and different channel characteristics that may result between each of the antennas of a receiving station and each of the antennas of a transmitting station. In some MIMO embodiments, the antennas may be separated by up to 1/10 of a wavelength or more.

Although the cellular device 300 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radiofrequency integrated circuits (RFICs), and combinations of various hardware and logic circuitry for performing at least the functions described herein. In some embodiments, the functional elements may refer to one or more processes operating on one or more processing elements.

The embodiments described may be implemented in one or a combination of hardware, firmware and software. Embodiments may also be implemented as instructions stored on a computer-readable storage medium, which may be read and executed by at least one processor to perform the operations described herein. A computer-readable storage medium may include any non-transitory mechanism for storing information in a form readable by a machine (e.g., a computer). For example, a computer-readable storage medium may include readonly memory (ROM), random-access memory (RAM), magnetic disk storage media, optical storage media, flash-memory devices, and other storage devices and media. In these embodiments, one or more processors may be configured with the instructions to perform the operations described herein.

In some embodiments, the processing circuitry 306 maybe configured to receive OFDM communication signals over a multicarrier communication channel in accordance with an OFDMA communication technique. The OFDM signals may comprise a plurality of orthogonal subcarriers. In some broadband multicarrier embodiments, the cellular device 300 may operate as part of a broadband wireless access (BWA) network communication network, such as a Worldwide Interoperability for Microwave Access (WiMAX) communication network or a 3rd Generation Partnership Project (3GPP) Universal Terrestrial Radio Access Network (UTRAN) or a Long-Term-Evolution (LTE) communication network or an LTE- Advanced communication network or a fifth generation (5G) LTE communication network or a high speed downlink/uplink access (HSDPA/HSUPA) communication network, although it is not limited in this respect.

The PHY circuitry 302 may also be configured to transmit and receive radio frequency electrical signals to communicate directly with one or more separate wireless devices using a WiFi communication channel of a WiFi communication spectrum. The MAC circuitry 304 may be configured to prepare frames or packets for communicating according to a WiFi standard such as an IEEE 802.11 standard for example. The processing circuitry 306 may be configured (e.g., by one or a combination of hardware, firmware and software) to initiate transmission of a WiFi subframe via the WiFi communication channel to reserve communication time on the WiFi communication channel for use by the same or a different cellular device during the reserved communication time.

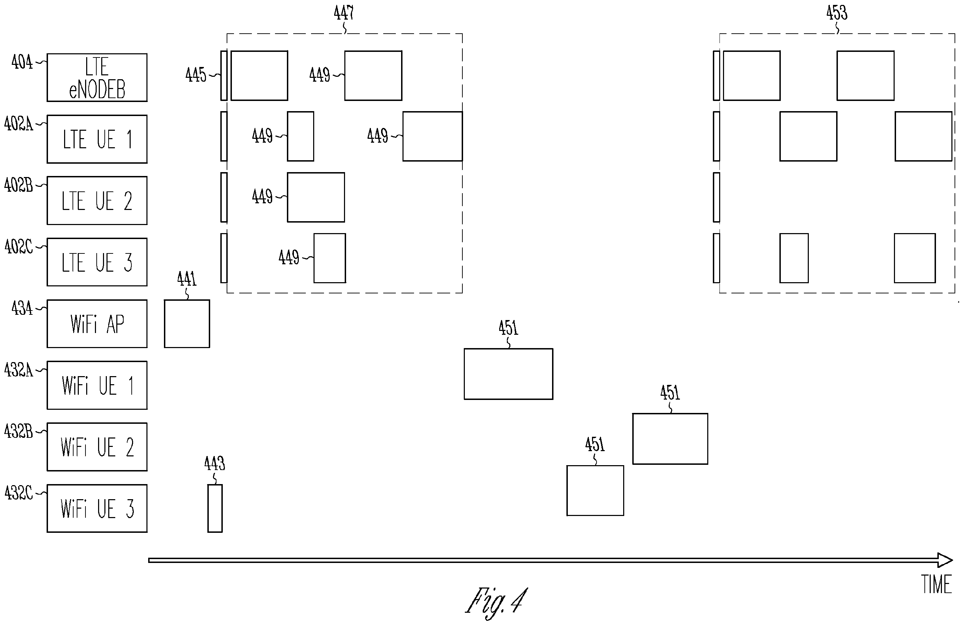

FIG. 4 illustrates a simplified example of operating a cellular device to reserve time on a WiFi communication channel. The upper part of the Figure shows communication timing windows or time slots for a four device LTE network that includes LTE eNB 404, and LTE UEs 402a,b,c. The lower part of the Figure shows communication timing windows for a four device WiFi network that includes WiFi AP 434, and WiFi UEs 432a,b,c. Time slot 441 and time slot 443 represent communication using the WiFi network by WiFi AP 434 and WiFi UE 432c, respectively. At time slot 445, the LTE eNB 404 transmits a WiFi subframe on a WiFi Communication channel to reserve time on the WiFi communication channel. The subframe may include a header or may include a message. In response to the subframe, the WiFi devices defer their transmissions. Box 447 represents an amount of time reserved for communication by the LTE devices using the WiFi communication channel. The time slots 449 represent communications using the WiFi communication channel by the LTE devices during the reserved time.

In cellular systems the communications of both the eNB and the UE are scheduled by the eNB. The eNB inherently knows what needs to be transmitted based on its buffers. In some cases, persistent allocations (like reserve time to send a voice packet on uplink every 20ms) are known ahead of time by the eNB due to the setup of the dedicated bearer, and the subsequent teardown of the bearer ends the recurring allocations. In other cases, the UE notifies the eNB of its desire to transmit via various bandwidth request mechanisms. The eNB knows what needs to be transmitted in the near future, and the eNB may generate a map that is sent to all UEs and the map indicates what portions of spectrum are used when and by which subscribers for both downlink and uplink communications. The map may communicate the reserved time to a UE and the UE communicates accordingly. Thus, an eNB may not transmit using the WiFi communication channel during the time reserved for communication by the LTE devices. Although the example of FIG. 4 shows LTE eNB 404 transmitting a message to reserve the communication time, any of the LTE network devices may transmit the message that reserves the communication time. After expiration of the reserved time (box 447), the WiFi devices communicate using the WiFi network represented by time slots 451. Box 453 represents a second communication time on the WiFi network reserved by the LTE devices.

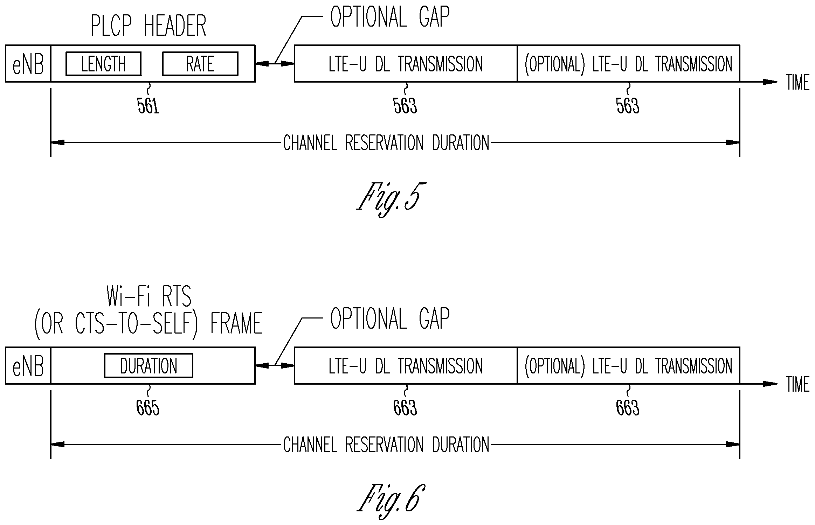

As explained above, the processing circuitry 306 initiates transmission of a subframe of a WiFi communication protocol to reserve time on a WiFi communication channel. FIG. 5 shows a timing diagram of an example of a time reserving message sent by a cellular device. The message includes a WiFi communication protocol header and is followed by one or more subframes of a cellular network protocol. The header spoofs a physical layer of a WiFi device to reserve the WiFi communication channel. The example in FIG. 5 shows the message including a physical layer convergence protocol (PLCP) header 561, and the PLCP header is followed by one or more unlicensed LTE downlink (LTE-U DL) subframes 563. The PLCP header 561includes a LENGTH and RATE parameter in the signal field. These parameters can be used to indicate the duration for which the WiFi channel is reserved. In an example intended to be illustrative, the RATE parameter may be set to the minimum RATE value to indicate binary phase shift key (BPSK) modulation and a data rate of 6 megabits per second (6Mbps). The LENGTH parameter may be calculated as the desired duration expressed in seconds divided by the RATE in Mbps and further divided by 8 to convert the resulting value from bits to bytes. The result may be rounded up to the next integer value to determine the value of the LENGTH parameter. In certain embodiments, the physical layer spoofing approach can allow reserving the channel for approximately 5 milliseconds (5ms) and may allow transmission of up to five LTE-U DL subframes.

FIG. 6 shows a timing diagram of another example of a time reserving message sent by a cellular device. The message takes advantage of the Virtual Carrier Sense feature of a WiFi communication protocol to reserve time on a WiFi communication channel. The Virtual Carrier Sense is a mechanism that includes transmitting an IEE802.11 frame that includes a duration field. The duration field contains a value for which the WiFi communication channel should be considered busy. Prior to sending cellular communications, a cellular device sends a subframe that includes a Request-to-Send (RTS) packet of a WiFi communication protocol or a subframe that includes a Clear-to-Send (CTS) packet (sometimes referred to as a CTS-to-self packet). The RTS, CTS, or CTS-to-self packet 665 includes a duration parameter provided by the MAC layer circuitry. In certain embodiments, the duration parameter is the number of microseconds (µβ) that the channel will be reserved. When the WiFi devices decode the RTS, CTS, or CTS-to-self packet 665 and the duration parameter value, the WiFi devices set their network allocation vector (NAV) accordingly, and the cellular device may send one or more cellular transmissions 663. The WiFi devices use the NAV to set a counter. Virtual Carrier Sense assumes that the WiFi network is busy while the counter is nonzero and the WiFi devices will therefore wait for the reserved time. In certain embodiments, this approach may reserve the WiFi communication channel for up to 65ms, which allows for fully functional LTE frames to be communicated during the reserved time. After expiration of the duration, the WiFi devices return to normal operation. Operation on the WiFi spectrum by a cellular device may be delayed until the next WiFi communication channel reservation message.

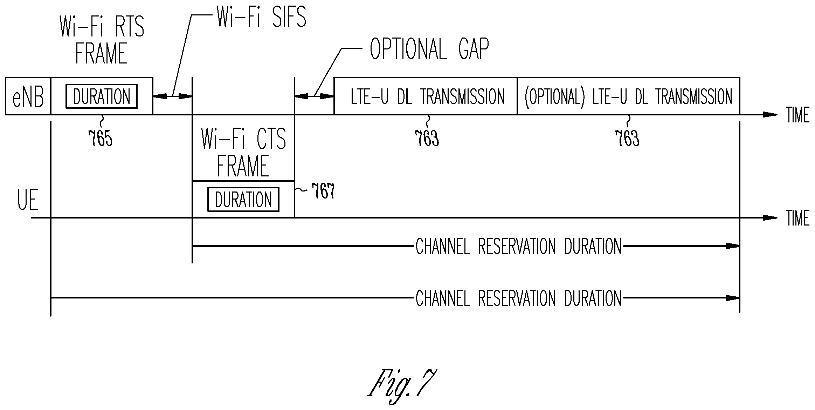

FIG. 7 shows a timing diagram of an embodiment including a time reserving message sent by cellular devices. This approach uses the RTS-CTS packet exchange of the WiFi communication protocol between two devices. A first cellular device (either a UE or eNB) may send the RTS message. In response to detecting the RTS message, a second cellular device (again either a UE or eNB) may transmit the CTS message to reserve the communication time. The duration parameters of the RTS frame 765 and CTS frame 767 are set to the time to reserve the channel (e.g., expressed in µ8).

As for the approach in the example of FIG. 6, the approach in the example of FIG. 7 may reserve the WiFi communication channel for up to 65ms in certain embodiments. An advantage of the approach in the example of FIG. 7 is that the complete RTS-CTS exchange results in WiFi devices in the proximity of both cellular devices performing the RTS-CTS exchange deferring their transmissions. In some embodiments, the duration parameter of the WiFi frames in the examples of FIG. 6 and FIG. 7 can be set to an arbitrary (e.g., maximum) length to reserve the communication channel. A cellular device may transmit a contention free period end (CF-end) frame of the WiFi protocol to end the reserved communication time.

The radio frequency (RF) signals involved in a WiFi network are different from the RF signals involved in a cellular network. For example, the signal properties may differ in sample rate, subcarrier spacing, etc. It may be necessary to align the WiFi transmission by a cellular device to a time slot of the WiFi network. Processing circuitry 306 of FIG. 3 aligns transmission of a WiFi subframe by the cellular device according to a sensed WiFi transmission by a WiFi device (e.g., the last sensed transmission by a WiFi device). Additionally, the different signal properties between the two types of networks may require the cellular devices to implement complex control systems or processing steps to rapidly change the signal properties of their communications. In some embodiments, the messages that reserve time on the WiFi communication channel can be pre-recorded. The messages are recorded in the time domain, re-sampled in the frequency supported by the cellular devices, and stored in the cellular devices. A pre-recorded message is then simply be retrieved from memory and transmitted by playing it back when it is desired to reserve communication time.

To provide for an acceptable level of performance by both the cellular devices and the WiFi devices, it may be desirable to promote fairness in the access to the WiFi spectrum among the devices. One approach to promote fairness is to limit the maximum time that the cellular devices can reserve WiFi communication time. In some embodiments, a cellular device (e.g., the eNB of FIG. 4) reserves communication time of a fixed time duration. For example, a Virtual Carrier Sense frame may always include the same value in the duration field. When the duration expires, there is a fixed waiting period before a cellular device is able to again transmit a time reserving message. The WiFi device operates using the WiFi communication channel during the fixed waiting period. The value of the duration field may be optimized according to the needs of a specific network. If the duration is too short, the reserving of time may result in excessive overhead leading to inefficient use of the WiFi and cellular networks. If the duration is too long, the level of quality of the WiFi network may become unacceptable.

In some embodiments, the periodicity with which a cellular device reserves communication time changes, but the amount of reserved time is for a fixed period. In some embodiments, the frequency with which reserving requests are transmitted may change according to utilization of the cellular network; with more reserving messages sent when the cellular network experiences high traffic. The one or more antennas 301 may be used to sense traffic on the cellular network. The processing circuitry 306 may initiate transmission of a number of messages to reserve a number of communication time slots on the WiFi communication channel, and may adjust the number of reserving messages sent according to the determined communication activity on the cellular network. In some embodiments, the one or more antennas 301 may be used to sense traffic on the WiFi spectrum and adjust the number of reserving messages sent according to the determined communication activity on the WiFi spectrum.

Another approach is to allow the duration time to be a dynamic value that changes according to one or both of the traffic in the WiFi spectrum and the traffic in the cellular spectrum. In some embodiments, the one or more antennas 301 may be used to sense communication activity on the WiFi communication channel. The processing circuitry 306 may adjust the value of the duration field (e.g., in one or both of a RTS message and a CTS message) according to the sensed communication activity. In some examples not covered by the claims, the processing circuitry 306 adjusts the transmission time of a message, by moving the transmission earlier or later. This allows the cellular device to take advantage of a determined lull in the WiFi network or delay the transmission when the WiFi spectrum is experiencing high traffic. In certain embodiments, the WiFi communication channel is continuously monitored to detect transmissions by WiFi devices.

The several embodiments discussed have sometimes been described in terms of reserving time on a WiFi communication channel of a WiFi spectrum. The concepts can be expanded to reserve time on multiple WiFi communication channels. The cellular device 300 may transmit multiple messages according to a WiFi communication protocol to reserve communication time on a multiple of WiFi communication channels. For example, the processing circuitry may initiate RTS or CTS messages on multiple WiFi channels and the cellular transmissions may be multiplexed among the reserved channels.

In some embodiments, a short time duration can be provided during or after transmission of the Virtual Carrier Sense frame to sense any WiFi transmissions initiated more or less in unison with the Virtual Carrier Sense frame. When a WiFi transmission is sensed that overlaps the Virtual Carrier Sense frame a new Virtual Sense frame could be transmitted at the conclusion of the sensed WiFi transmission to re-request the reserving of time on the WiFi communication channel. This provides a way for the cellular device to handle collisions on the WiFi communication channel.

As explained previously, the network example of FIG. 4 shows a simple cellular network and a simple WiFi network. In actual networks, a cellular service provider may colocate many eNBs. In some examples, the transmission of Virtual Carrier Sense frames are synchronized among the eNBs to maximize efficient use of the WiFi spectrum by ensuring that neighboring eNBs are operating in cellular-only or WiFi-only modes. In these cases, the duration of the reserve time may have to be extended so that reservation of WiFi channels can be coordinated with completion of WiFi transmissions. This extending of the reservation time may also be useful when multiple eNBs are co-located by different service providers.

The several examples provided describe cellular devices accessing unlicensed radio access network resources in order to increase capacity of the cellular device network. Mechanisms to promote fairness in use of the unlicensed resources can promote acceptable quality of service of both the cellular network and the unlicensed radio access network.

The above detailed description includes references to the accompanying drawings, which form a part of the detailed description. The drawings show, by way of illustration, specific embodiments in which the invention can be practiced. These embodiments are also referred to herein as "examples."

Method examples described herein can be machine or computer-implemented at least in part. Some examples can include a computer-readable storage medium or machine-readable storage medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. The code can be tangibly stored on one or more volatile, non-transitory, or non-volatile tangible computer-readable media, such as during execution or at other times. Examples of these tangible computer-readable storage media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The following claims are hereby incorporated into the detailed description, with each claim standing on its own as a separate embodiment. Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A wireless cellular device (300) comprising:
physical layer circuitry (302) configured to transmit and receive radio frequency electrical signals to communicate directly with one or more separate wireless devices using a communication channel of a cellular network and a WiFi communication channel of a WiFi communication spectrum; and
processing circuitry (306) configured to initiate transmission of a message comprising a WiFi subframe via the WiFi communication channel to reserve communication time on the WiFi communication channel for use by the same or a different cellular device during the reserved communication time;
wherein the message is recorded in the time domain, re-sampled in the frequency supported by the cellular device, and stored in the cellular device, and is retrieved from memory and transmitted in alignment with a time slot of a last sensed transmission by a WiFi device.

2. The cellular device (300) of claim 1, wherein the cellular device (300) includes at least one of a long term evolution, LTE, cellular device, an advanced LTE cellular device, and a fifth generation, 5G, LTE cellular device.

3. The cellular device (300) of any one of claims 1 or 2, wherein the processing circuitry (306) is configured to initiate transmission of a clear to send, CTS, packet, a request to send, RTS, packet, or a header of a WiFi communication protocol to reserve the communication time on the WiFi communication channel.

4. The cellular device (300) of any one of claims 1-3, wherein the processing circuitry (306) is configured to initiate a contention free period end, CF-end, frame of a WiFi protocol to end the reserved communication time.

5. The cellular device (300) of any one of claims 1-4, wherein the processing circuitry (306) is configured to initiate transmission of a message according to a WiFi communication protocol, wherein the message includes a duration field to indicate an amount of time to reserve the WiFi communication channel.

6. The cellular device (300) of any one of claims 1-5, wherein the processing circuitry (306) is configured to initiate transmission of a plurality of messages according to a WiFi communication protocol to reserve communication time on a plurality of WiFi communication channels.

7. A method of operating a wireless cellular device network, the method comprising:
transmitting a message comprising a WiFi subframe via a WiFi communication channel of a WiFi communication spectrum using a first cellular device (300) to reserve communication time on the WiFi communication channel; and
communicating information via the WiFi communication channel using the first cellular device (300) or a separate cellular device during the reserved communication time;
wherein the message is recorded in the time domain, re-sampled in the frequency supported by the cellular device, and stored in the cellular device, and is retrieved from memory and transmitted in alignment with a time slot of a last sensed transmission by a WiFi device.

8. The method of claim 7, wherein transmitting a message comprising a WiFi subframe includes transmitting at least one of an RTS message, a CTS message, or a protocol header of a WiFi communication protocol to reserve the communication time on the WiFi communication channel.

9. The method of any one of claims 7 or 8, wherein transmitting a message comprising a WiFi subframe includes transmitting a WiFi communication protocol message having a duration field to indicate an amount of time to reserve the WiFi communication channel.

10. A computer readable storage medium including instructions that when executed by hardware processing circuitry of a wireless cellular device cause the cellular device to:
perform the method of one of claims 7 to 9.

## Patentansprüche

1. Drahtlose Mobilvorrichtung (300) umfassend:
Physikalische-Schicht-Schaltung (302), die konfiguriert ist zum Übertragen und Empfangen von Funkfrequenz-elektrischen Signalen zum direkten Kommunizieren mit einer oder mehrerer separater drahtloser Vorrichtungen unter Verwenden eines Kommunikationskanals eines Mobilnetzes und eines WiFi Kommunikationskanals eines WiFi Kommunikationsspektrums; und
Verarbeitungsschaltung (306), die konfiguriert ist zum Initiieren von Übertragung einer Nachricht umfassend einen WiFi Subrahmen über den WiFi Kommunikationskanal, um Kommunikationszeit auf dem WiFi Kommunikationskanal zu reservieren zur Verwendung durch dieselbe oder eine verschiedene Mobilvorrichtung während der reservierten Kommunikationszeit;
wobei die Nachricht in der Zeitdomäne aufgezeichnet wird, in der Frequenz neu gesampelt wird, die von der Mobilvorrichtung unterstützt wird, und in der Mobilvorrichtung gespeichert wird, und aus Speicher abgerufen wird und ausgerichtet an einem Zeitschlitz einer zuletzt erfassten Übertragung durch eine WiFi Vorrichtung übertragen wird.

2. Mobilvorrichtung (300) nach Anspruch 1, wobei die Mobilvorrichtung (300) mindestens eines von einer Long Term Evolution, LTE, Mobilvorrichtung, einer Advanced LTE Mobilvorrichtung, und einer fünften Generation, 5G, LTE Mobilvorrichtung beinhaltet.

3. Mobilvorrichtung (300) nach einem der Ansprüche 1 oder 2, wobei die Verarbeitungsschaltung (306) konfiguriert ist zum Initiieren von Übertragung eines Clear-To-Send, CTS, Pakets, eines Request-To-Send, RTS, Pakets, oder einer Kopfzeile eines WiFi Kommunikationsprotokolls zum Reservieren der Kommunikationszeit auf dem WiFi Kommunikationskanal.

4. Mobilvorrichtung (300) nach einem der Ansprüche 1-3, wobei die Verarbeitungsschaltung (306) konfiguriert ist zum Initiieren eines Contention-Free-Period-End, CF-End, Rahmens eines WiFi Protokolls zum Beenden der reservierten Kommunikationszeit.

5. Mobilvorrichtung (300) nach einem der Ansprüche 1-4, wobei die Verarbeitungsschaltung (306) konfiguriert ist zum Initiieren von Übertragung einer Nachricht gemäß eines WiFi Kommunikationsprotokolls, wobei die Nachricht ein Dauer-Feld beinhaltet zum Anzeigen einer Zeitmenge zum Reservieren des WiFi Kommunikationskanals.

6. Mobilvorrichtung (300) nach einem der Ansprüche 1-5, wobei die Verarbeitungsschaltung (306) konfiguriert ist zum Initiieren von Übertragung einer Vielzahl von Nachrichten gemäß eines WiFi Kommunikationsprotokolls zum Reservieren von Kommunikationszeit auf einer Vielzahl von WiFi Kommunikationskanälen.

7. Verfahren zum Betreiben eines drahtlosen Mobilvorrichtungsnetzwerks, das Verfahren umfassend:
Übertragen einer Nachricht umfassend einen WiFi Subrahmen über einen WiFi Kommunikationskanal eines WiFi Kommunikationsspektrums unter Verwenden einer ersten Mobilvorrichtung (300) zum Reservieren von Kommunikationszeit auf dem WiFi Kommunikationskanal; und
Kommunizieren von Informationen über den WiFi Kommunikationskanal unter Verwenden der ersten Mobilvorrichtung (300) oder einer separaten Mobilvorrichtung während der reservierten Kommunikationszeit;
wobei die Nachricht in der Zeitdomäne aufgezeichnet wird, in der Frequenz neu gesampelt wird, die von der Mobilvorrichtung unterstützt wird, und in der Mobilvorrichtung gespeichert wird, und aus Speicher abgerufen wird und ausgerichtet an einem Zeitschlitz einer zuletzt erfassten Übertragung durch eine WiFi Vorrichtung übertragen wird.

8. Verfahren nach Anspruch 7, wobei Übertragen einer Nachricht umfassend einen WiFi Subrahmen Übertragen mindestens eines von einer RTS Nachricht, einer CTS Nachricht, oder einer Protokollkopfzeile eines WiFi Kommunikationsprotokolls beinhaltet zum Reservieren der Kommunikationszeit auf den WiFi Kommunikationskanal.

9. Verfahren nach einem der Ansprüche 7 oder 8, wobei Übertragen einer Nachricht umfassend einen WiFi Subrahmen Übertragen einer WiFi Kommunikationsprotokollnachricht aufweisend ein Dauer-Feld zum Anzeigen einer Zeitmenge zum Reservieren des WiFi Kommunikationskanals beinhaltet.

10. Computerlesbares Speichermedium beinhaltend Anweisungen, die, wenn sie durch eine Hardwareverarbeitungsschaltung einer drahtlosen Mobilvorrichtung ausgeführt werden, die Mobilvorrichtung veranlassen zum:
Durchführen des Verfahrens nach einem der Ansprüche 7 bis 9.

## Revendications

1. Un dispositif cellulaire sans fil (300) comprenant :
un ensemble de circuits de couche physique (302) configuré pour transmettre et recevoir des signaux électriques radiofréquence pour communiquer directement avec un ou plusieurs dispositifs sans fil séparés en utilisant un canal de communication d'un réseau cellulaire et un canal de communication WiFi d'un spectre de communication WiFi ; et
un ensemble de circuits de traitement (306) configuré pour commencer la transmission d'un message comprenant une sous-trame WiFi via le canal de communication WiFi pour réserver un temps de communication sur le canal de communication WiFi pour l'utilisation par le même dispositif cellulaire ou un différent pendant le temps de communication réservé ;
dans lequel le message est enregistré dans le domaine temporel, ré-échantillonné dans la fréquence supportée par le dispositif cellulaire, et stocké dans le dispositif cellulaire, et est récupéré à partir d'une mémoire et transmis en alignement avec un slot temporel d'une dernière transmission détectée par un dispositif WiFi.

2. Le dispositif cellulaire (300) selon la revendication 1, dans lequel le dispositif cellulaire (300) inclut au moins l'un dispositif cellulaire d'évolution à long terme, LTE, d'un dispositif cellulaire LTE avancé, et d'un dispositif cellulaire LTE de cinquième génération, 5G.

3. Le dispositif cellulaire (300) selon l'une quelconque des revendications 1 ou 2, dans lequel l'ensemble de circuits de traitement (306) est configuré pour commencer la transmission d'un paquet prêt à l'envoi, CTS, d'un paquet de requête d'envoi, RTS, ou d'un en-tête d'un protocole de communication WiFi pour réserver le temps de communication sur le canal de communication WiFi.

4. Le dispositif cellulaire (300) selon l'une quelconque des revendications 1 à 3, dans lequel l'ensemble de circuits de traitement (306) est configuré pour commencer une trame de fin de période sans contention, CF-end, d'un protocole WiFi pour mettre fin au temps de communication réservé.

5. Le dispositif cellulaire (300) selon l'une quelconque des revendications 1 à 4, dans lequel l'ensemble de circuits de traitement (306) est configuré pour commencer la transmission d'un message selon un protocole de communication WiFi, dans lequel le message inclut un champ de durée pour indiquer une quantité de temps pour réserver le canal de communication WiFi.

6. Le dispositif cellulaire (300) selon l'une quelconque des revendications 1 à 5, dans lequel l'ensemble de circuits de traitement (306) est configuré pour commencer la transmission d'une pluralité de messages selon un protocole de communication WiFi pour réserver un temps de communication sur une pluralité de canaux de communication WiFi.

7. Un procédé d'exploitation d'un réseau de dispositif cellulaire sans fil, le procédé comprenant :
la transmission d'un message comprenant une sous-trame WiFi via un canal de communication WiFi d'un spectre de communication WiFi en utilisant un premier dispositif cellulaire (300) pour réserver un temps de communication sur le canal de communication WiFi ; et
la communication d'une information via le canal de communication WiFi en utilisant le premier dispositif cellulaire (300) ou un dispositif cellulaire séparé pendant le temps de communication réservé ;
dans lequel le message est enregistré dans le domaine temporel, ré-échantillonné dans la fréquence supportée par le dispositif cellulaire, et stocké dans le dispositif cellulaire, et est récupéré à partir d'une mémoire et transmis en alignement avec un slot temporel d'une dernière transmission détectée par un dispositif WiFi.

8. Le procédé selon la revendication 7, dans lequel la transmission d'un message comprenant une sous-trame WiFi inclut la transmission d'au moins l'un d'un message RTS, d'un message CTS, ou d'un en-tête de protocole d'un protocole de communication WiFi pour réserver le temps de communication sur le canal de communication WiFi.

9. Le procédé selon l'une quelconque des revendications 7 ou 8, dans lequel la transmission d'un message comprenant une sous-trame WiFi inclut la transmission d'un message de protocole de communication WiFi ayant un champ de durée pour indiquer une quantité de temps pour réserver le canal de communication WiFi.

10. Un support de stockage lisible par ordinateur incluant des instructions qui, lorsqu'elles sont exécutées par un ensemble de circuits de traitement matériel d'un dispositif cellulaire sans fil, amènent le dispositif cellulaire à :
effectuer le procédé selon l'une des revendications 7 à 9.
